# EUROPEAN PATENT APPLICATION

(11) **EP 4 618 553 A1**
(43) Date of publication of application: **17.09.2025**
(21) Application number: 23888127.0
(22) Date of filing: 10.11.2023
(51) Int. Cl.: H04N 21/2187, H04N 21/431, H04N 21/4788

(54) **ONLINE LIVE BROADCAST METHOD AND APPARATUS, AND DEVICE AND STORAGE MEDIUM**

(30) Priority: 10.11.2022 CN 202211408348
(71) Applicant: Beijing Zitiao Network Technology Co., Ltd., Beijing 100190 (CN)
(72) Inventor: XING, Duolai, Beijing 100028 (CN); ZHAO, Chenxuan, Beijing 100028 (CN)
(74) Representative: Grünecker Patent- und Rechtsanwälte PartG mbB
(86) International application number: PCT/CN2023/131069
(87) International publication number: WO 2024/099442

(57) **Abstract**

Embodiments of the disclosure provide methods, apparatuses, devices and a storage medium for live streaming. The method includes determining whether the number of user comments received in a live steaming room reaches a threshold number, the user comments matching at least one preconfigured leading trending comment; and in response to the number of the matching user comments reaching the threshold number, presenting the at least one leading trending comment at a predetermined location on a user interface of the live streaming room. By pre-configuring at least one leading trending comment and presenting it when the user comment matches it, useful guidance can be provided to the user during live streaming, thereby improving the atmosphere of the live streaming room and enhancing the user experience.

## Description

This application claims the benefit of Chinese Patent Application No. 202211408348.5, entitled "Method, Apparatus, device, and Storage Medium for live streaming," filed on November 10, 2022, the entire content of which is incorporated herein by reference.

### FIELD

Example embodiments of the present disclosure generally relate to the field of computer, and in particular, to a method, an apparatus, a device, and a computer-readable storage medium for live streaming.

### BACKGROUND

With the development of computer technologies, various live streams can provide people with content about information, education, entertainment and so on. While watching a live stream, users may post comments in a live streaming room to express their views on the live streaming content. For example, in a live streaming room for viewing a game between two teams, viewers may express their support for the teams, players, and so on by posting comments.

### SUMMARY

In a first aspect of the present disclosure, a method for live streaming is provided. The method comprises: determining whether a number of user comments received in a live steaming room reaches a threshold number, the user comments matching at least one preconfigured leading trending comment; and in response to the number of the matching user comments reaching the threshold number, presenting the at least one leading trending comment at a predetermined location on a user interface of the live streaming room.

In a second aspect of the present disclosure, an apparatus for live streaming is provided. The apparatus comprises: a determining module configured to determine whether a number of user comments received in a live steaming room reaches a threshold number, the user comments matching at least one preconfigured leading trending comment; and a first presentation module configured to present, in response to the number of the matching user comments reaching the threshold number, the at least one leading trending comment at a predetermined location on a user interface of the live streaming room.

In a third aspect of the present disclosure, an electronic device is provided. The electronic device comprises at least one processing unit; and at least one memory coupled to the at least one processing unit and storing instructions for execution by the at least one processing unit. The instructions, when executed by the at least one processing unit, cause the electronic device to perform the method of the first aspect.

In a fourth aspect of the present disclosure, a computer-readable storage medium is provided. The computer-readable storage medium has a computer program stored thereon, and the computer program, when executed by a processor, implements the method of the first aspect.

It should be understood that the content described in this summary section is not intended to limit the key features or important features of the embodiments of the present disclosure, nor is it intended to limit the scope of the present disclosure. Other features of the present disclosure will become apparent from the following description.

### BRIEF DESCRIPTION OF DRAWINGS

The above and other features, advantages, and aspects of various embodiments of the present disclosure will become more apparent from the following detailed description in conjunction with the accompanying drawings. In the drawings, the same or similar reference signs refer to the same or similar elements, in which:
FIG. 1 illustrates a schematic diagram of an example environment in which embodiments of the present disclosure can be implemented;
FIG. 2 to FIG. 5D illustrate schematic diagrams of example pages related to live streaming according to some embodiments of the present disclosure;
FIG. 6 illustrates a flowchart of a process for live streaming according to some embodiments of the present disclosure;
FIG. 7 illustrates a block diagram of an apparatus for live streaming according to some embodiments of the present disclosure; and
FIG. 8 illustrates an electronic device in which one or more embodiments of the present disclosure may be implemented.

### DETAILED DESCRIPTION

The embodiments of the present disclosure will be described in more detail below with reference to the accompanying drawings. Although some embodiments of the present disclosure are illustrated in the drawings, it should be understood that the present disclosure can be implemented in various forms and should not be construed as being limited to the embodiments set forth herein. Rather, these embodiments are provided for a more thorough and complete understanding of the present disclosure. It should be understood that the drawings and the embodiments of the present disclosure are provided for illustrative purposes only and are not intended to limit the scope of protection of the present disclosure.

In the description of the embodiments of the present disclosure, the term "including" and the like should be understood as non-exclusive inclusion, that is, "including but not limited to". The term "based on" should be understood as "based at least in part on." The term "an embodiment" or "the embodiment" should be understood as "at least one embodiment". The term "some embodiments" should be understood as "at least some of the embodiments". Other explicit and implicit definitions may also be included below.

Herein, unless explicitly stated, "in response to A" performing a step is not intended that this step is performed immediately after "A", but may include one or more intermediate steps.

It is to be understood that the data involved in the technical solution, including but not limited to the data itself, the obtaining or usage of the data, and so on, should comply with the requirements of corresponding laws and regulations and relevant provisions.

It is to be understood that, before using the technical solution disclosed in the various embodiments of the present disclosure, the user shall be informed of the type, the scope of use, and use scenarios and so on of personal information involved in the present disclosure in an appropriate manner in accordance with relevant laws and regulations.

For example, in response to receiving an active request from a user, prompt information is sent to the user to explicitly prompt the user that an operation requested by the user will require to obtain and use personal information of the user, so that the user can autonomously select, according to the prompt information, whether to provide the personal information to software or hardware, such as an electronic device, an application program, a server, or a storage medium that performs the operations of the technical solutions of the present disclosure.

As an optional but non-limiting implementation, in response to receiving an active request of the user, the prompt information is sent to the user, for example, in the form of a pop-up window, in which the prompt information may be presented in the form of text. In addition, the pop-up window may further carry a selection control for the user to select "agree" or "not agree" to provide the personal information to the electronic device.

It should be understood that the above process for notifying and obtaining the user's authorization is merely illustrative, and do not limit the implementations of the present disclosure, and other approaches that meet the relevant laws and regulations may also be applied to the implementations of the present disclosure.

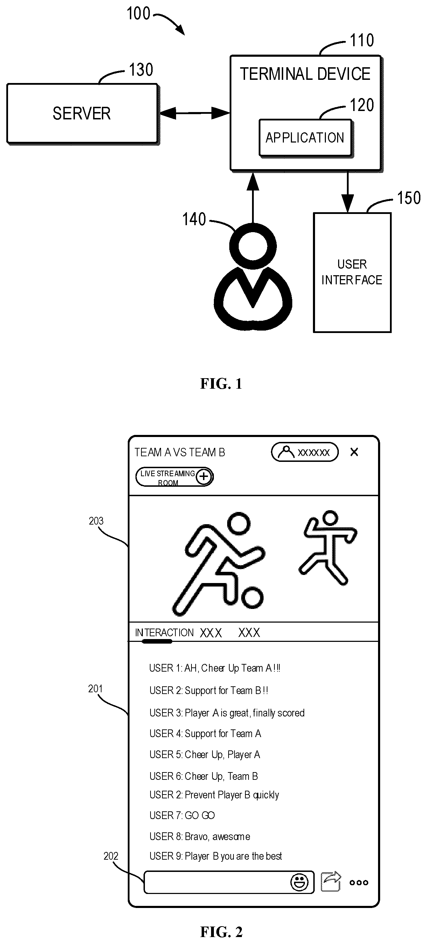

FIG. 1 illustrates a schematic diagram of an example environment 100 in which embodiments of the present disclosure can be implemented. In this example environment 100, an application 120 is installed in the terminal device 110. The user 140 may interact with the application 120 via the terminal device 110 and/or an attached device of the terminal device 110. The application 120 may be an application that supports live streaming. The application 120 can provide the live streaming content to the user in the live streaming room, and the user of the live streaming room may comment on the content streamed in the live streaming room. The terminal device 110 may present various user interfaces 150 of the application 120 to the user 140.

In some embodiments, the terminal device 110 communicates with a server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an e-book device, a gaming device, or any combination of the foregoing, including accessories and peripherals of these devices, or any combination thereof. In some embodiments, the terminal device 110 can also support any type of interface for a user (such as, a "wearable" circuit, and so on). The server 130 may be various types of computing systems/servers capable of providing computing capability, including, but not limited to, mainframes, edge computing nodes, computing devices in a cloud environment, and the like.

It should be understood that the structures and functions of the various elements in the environment 100 are described for illustrative purposes only and do not imply any limitation to the scope of the present disclosure.

Typically, in a live streaming room, a live streaming room manager may set the live streaming room, so that in a case that same comments published by users watching the live streaming content meet a certain condition, these same comments are displayed in a predetermined location in a comment area of the live streaming room as a single-line trending comment. For some live streaming content, for example, live streaming content with an adversarial nature, comment content for two or more parties with the adversarial nature cannot be better presented in such display mode. The "adversarial nature" herein may indicate that the live streaming content relates to multiple parties including at least two parties, and the live streaming content presents a process of determining a winner between the at least two parties through contest, competition, or comparison. The live streaming content with "adversarial nature" may include, but is not limited to, various games, such as sporting events, game events, talent competitions, and the like. For example, for football games, current single-line trending comments cannot intuitively present user comments for supporting two teams participating in the football game. In addition, including live streaming content with adversarial nature, current various live streaming rooms lack support of background leading comments, resulting in a poor atmosphere in the live streaming room, thereby affecting the users' viewing experience.

According to the embodiments of the present disclosure, a solution for live streaming is provided. According to the solution, by configuring and presenting the leading trending comment, the users' comments can be beneficially guided during live streaming, thereby improving the atmosphere of the live streaming room and enhancing the users' viewing experience. In some embodiments, for the live streaming content with the adversarial nature, the trending comment content for the two or more adversarial parties can be simultaneously presented according to the implementation of the present disclosure, so that the user comments for the two or more adversarial parties can be presented more intuitively, thereby further enhancing the viewing experience.

Some example embodiments of the present disclosure will be described below with reference to the accompanying drawings. In the example embodiments to be described below, the concept according to the present disclosure will be described mainly in terms of live streaming content 203 having the adversarial nature being presented in a live streaming room. It should be understood that the embodiments of the present disclosure are also applicable to the live streaming content 203 without adversarial nature, for example, live streaming content 203 of a dialog type, a single or multi-person talent show, and the like.

FIG. 2 schematically illustrates a schematic diagram of presenting an example live streaming interface according to some embodiments of the present disclosure. For example, as shown in FIG. 2, in addition to a display area of the live streaming content 203, the live streaming interface may further include a comment area 201. During viewing of the live streaming content 203, the comment area 201 may not be displayed by default to thereby present more live streaming content 203. The comment area 201 may be triggered by some suitable means to be displayed for presenting the comments posted by the users viewing the live streaming content 203. FIG. 2 illustrates a schematic diagram of the comment area 201 triggered for presentation. In some embodiments, the comment area 201 may be presented by clicking on a button or icon such as "interact" or "comment" located at a predetermined location (e.g., at the bottom) of the live streaming interface. In some embodiments, the comment area 201 may also be presented by clicking on the text and an icon input box 202 at the bottom of the live streaming interface.

According to the embodiments of the present disclosure, in order to guide the users' comments, so as to improve the atmosphere of the live streaming room and enhance the users' viewing experience, the management of the live streaming room can preconfigure at least one leading trending comment to guide the users' comments. The leading trending comment is a specific phrase that can be used to guide the users' comments.

The leading trending comment may be set by an operator of the live streaming room or the live streaming initiator in the background as needed before or during the live streaming. In some embodiments, the setting of the leading trending comment may be based on, for example, live streaming content 203. For example, in a case that the live streaming content 203 is a game between two teams (e.g., including team A and team B), the leading trending comment may be encouraging paragraphs that have tendencies to various parties, including "Support for Team A", "Cheer Up, Team B" and so on. In some embodiments, the leading trending comment may also include paragraphs that have no tendency to respective teams involved in the live streaming content 203, for example, including a paragraph encouraging a player participating in the game, for example, "Cheer Up, Player A", "Support for Player B", and the like. It should be understood that, as mentioned above, the leading trending comments are also applicable to any suitable live streaming content 203 without adversarial nature.

In some embodiments, one or more leading trending comments may be set, and the specific number of leading trending comments is not limited. In some embodiments, in order to improve the display effect, the number of words of the leading trending comment 205 may also be reasonably set with a maximum word number threshold, thereby avoiding the problem that the leading trending comment 205 cannot be displayed due to excessive number of words. In addition, in the live streaming room, the number of words of the user comment may also be set with a maximum word number threshold.

In the case that certain triggering conditions are satisfied, one or more leading trending comments will be presented in a user interface of the live streaming room. In the following, the triggering condition and the example presentation mode of the leading trending comment will be described schematically through the accompanying drawings.

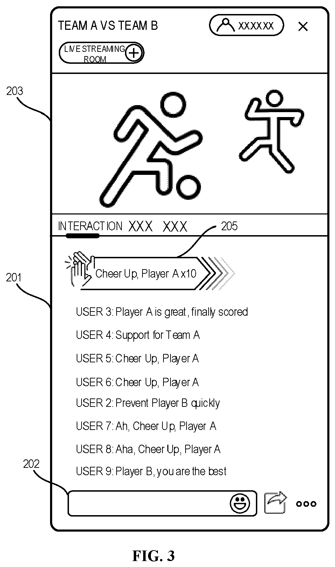

The triggering condition of the leading trending comment 205 may include whether the number of user comments received in the live streaming room that match the preconfigured leading trending comment reaches a threshold number. The threshold number may be reasonably set according to the live streaming content 203 or the like. For example, in some embodiments, the threshold number may be 10. In FIG. 3, if the number of user comments "Cheer Up, Player A" that is posted by the users and matches the leading trending comment 205 exceeds 10, the leading trending comment 205 of "Cheer Up, Player A" is displayed at a predetermined location of the live streaming room. In some embodiments, whether the instant number of matched user comments reaches a threshold number. For example, the rate of the matched user comments may be determined to be v ≧ z, where the units of v and z may be "item/second", and z is the threshold number. In some embodiments, whether the number of matched user comments reaches a threshold number for a period of time. For example, the number of matched user comments may be determined to be a > x and last for y seconds, where x is the threshold number, and the specific values of x and y may be set according to actual application.

If a trigger condition is satisfied (e.g., the number of matched user comments reaches a threshold number), the leading trending comment 205 is displayed at a predetermined location of the user interface of the live streaming room. For example, FIG. 3 illustrates that the leading trending comment 205 "Player A Cheer Up" for encouraging a certain player involved in the live streaming content 203 is displayed at the top region of the comment area 201. In some embodiments, while displaying the leading trending comment 205, the number of user comments (e.g., "× 10") that match the leading trending comment 205 may also be displayed at an appropriate location on the user interface (e.g., near the leading trending comment 205). The displayed number may be a real-time number, which may be updated in real time or by a predetermined time interval (e.g., 0.5 seconds or any other suitable time interval). In this way, it can actively guide and display the user comments with higher popularity, so that the atmosphere of the live streaming room can be improved.

In some embodiments, a leading trending comment 205 with a dynamic effect may also be presented at the appropriate location on the user interface. On the one hand, a leading trending comment using a dynamic effect may be used to indicate that the number of user comments that match the presented leading trending comment 205 is still increasing. On the other hand, the dynamic effect may also attract users' attention, thereby facilitating the guidance of user comments. For example, FIG. 3 illustrates a dynamic schematic diagram of the leading trending comment 205 continuously flashing to the right to indicate that the number of user comments that match the presented leading trending comment 205 is still increasing.

Of course, it should be understood that the user interface display for dynamic effects described herein is merely illustrative and is not intended to limit the scope of the present disclosure. Other suitable user interface displays with dynamic effects are also possible. For example, in some embodiments, the dynamic effect of the presented leading trending comment may also be implemented by left and right shaking, flashing and the like.

Additionally, in some embodiments, an icon may also be displayed at an appropriate location while displaying the leading trending comment 205 and the number of user comments that match the leading trending comment 205, and the icon may be relevant to the paragraph of the leading trending comment 205. For example, FIG. 3 illustrates that an applause icon is also displayed at the front of the leading trending comment 205. Of course, it should be understood that this is merely illustrative, and any other icons or identifications may be used to further optimize the display effect of the leading trending comment 205, for example, these icons or identifications include, but are not limited to, a cheer stick, an applause, or a photo or cartoon image of the player, and the like, and thereby facilitate the user watching the live streaming to concern. Of course, in some alternative embodiments, icons or identifications may not be displayed.

In order to actively guide the user comments and display more diverse user trending comments, the leading trending comment 205 may be hidden after being presented for a certain period of time. For example, in some embodiments, if a duration (hereinafter referred to as the first duration) for presenting the leading trending comment 205 exceeds a certain threshold duration (hereinafter referred to as a first threshold duration), the leading trending comment 205 is hidden, so that other leading trending comments 205 may be displayed. Each of the different leading trending comments 205 may be set to with different presentation times based on different content and adjustments, for example, may be any suitable duration between 4 to 30 seconds.

Additionally, in order to facilitate the presence of a plurality of preconfigured leading trending comments in turn, as described above, in some embodiments, zero setting may also be performed for the leading trending comment 205. For example, in some embodiments, in a case that the first duration for presenting the leading trending comment 205 exceeds a certain duration (the duration may be the first threshold duration for hiding the leading trending comment 205 as described above or any other duration), the number of user comments matching the leading trending comment 205 reaches a maximum threshold, the number of user comments matching the leading trending comment 205 may be set to zero, thereby facilitating presentation of the other leading trending comments 205.

In some embodiments, the maximum threshold of the number of user comments that match the leading trending comment 205 may be set reasonably according to the live streaming content 203, etc., for example, the maximum threshold may be set to "999" or "9999", etc. In some embodiments, if the first duration for presenting the leading trending comment 205 does not exceed the first threshold for hiding the leading trending comment 205, but the number of user comments that match the leading trending comment 205 has exceeded the set maximum threshold, while presenting the maximum threshold near the leading trending comment 205, it may also indicate that the number is still increasing through an appropriate manner, which may be, but not limited to, a change of size (e.g., constantly changing), flashing, a change of color, etc., of the leading trending comment 205 and/or the corresponding number.

"Matching" as described in the foregoing, that is, "matching" between the user comment and the leading trending comment 205, may refer to fuzzy match or exact match. The fuzzy match may include a fuzzy match between the user comment that matches the leading trending comment 205 and the text of the leading trending comment 205, for example, the user comment matching the leading trending comment 205 may further include some modal particles that do not affect the semantic while the user comment matching the leading trending comment 205 includes the paragraph of the leading trending comment 205. For example, for the leading trending comment 205 "Support for Player A", the user comments such as, such as "Ah, Support for Player A", "Aha, Support for Player A," or "I support Player A," and so on, belong to a fuzzy match with the leading trending comment 205, so that they can be included in the number of user comments that match the leading trending comment 205.

In some embodiments, the fuzzy match may further include a semantic fuzzy match, that is, whether the user comments are matched may be determined by analyzing the semantics of the user comments. For example, for the leading trending comment 205 of "Support for Player A", if the player A also has a nickname "Little A" that is well known to everyone, then the user comments such as "Support Little A", "Ah, Support for Little A," and the like, may also be counted in the number of user comments that match the leading trending comment 205 "Support for Player A". Of course, in order to reduce the calculation amount, the number of user comments that match the leading trending comment 205 may also be determined only by text fuzzy match or text exact match.

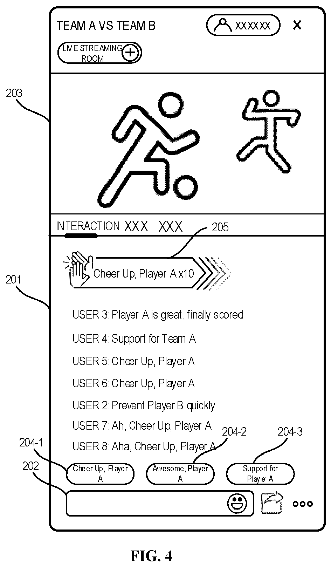

In some embodiments, in order to facilitate the user to rapidly publish the user comment matching the leading trending comment, a tag 204 associated with the pre-configured at least one leading trending comment may be presented at an appropriate location (e.g., a second predetermined location) on the user interface of the live streaming room. The appropriate location may be a location adjacent to the user input box 202, as shown in FIG. 4. In some embodiments, the displayed tag 204 may include leading trending comments that have been presented, are being presented, and/or are to be presented. For example, in the presented live streaming content 203, such as a ball game, after the player A scored, tags 204-1, 204-2, 204-3 (hereinafter referred to collectively or individually referred to as tag 204 for the purpose of discussion) such as, "Cheer Up Player A", "Awesome, Player A", "Support for Player A" may be presented above the input box 202 of the user interface. The tag 204 matches the preconfigured leading trending comment.

The user may issue a user comment consistent with the tag 204 through an appropriate predetermined operation, such as clicking on the tag 204, that is, presenting the generated user comment in the comment area 201 of the live streaming room. As such, the user comment is completely matched to the preconfigured leading trending comment 205 "Cheer Up Player A". This approach can further help the users post user comments matching the leading trending comment 205, so as to facilitate the presentation of the leading trending comment 205, and further improving the atmosphere of the live streaming room.

Some triggering occasions and presentation modes of some leading trending comments without tendency have been described above by mainly referring to FIG. 3 and FIG. 4. The leading trending comment without the tendency is comment content not regarding two or more parties involved in the presented adversarial live streaming content 203, for example, a situation of encouraging the players in the two teams of the game or other situations. For the live streaming content 203 with the adversarial nature, that is, the live streaming content 203 involves at least two parties, namely a first party and a second party (e.g., representing Team A and Team B, respectively). For each party, a certain number of leading trending comments may be preconfigured in the live streaming room. For example, for Team A, the leading trending comment 205, such as "Cheer Up, Team A," "Support for Team A," "The coach of Team A is great," and the like, may be preconfigured, and it is also similar for Team B. In order to reasonably and fairly present such adversarial leading trending comments 205, and to reflect the supports of respective parties, the leading trending comment 205 related to each party may be presented simultaneously after the number of user comments matching the leading trending comment 205 associated with each party reaches a threshold.

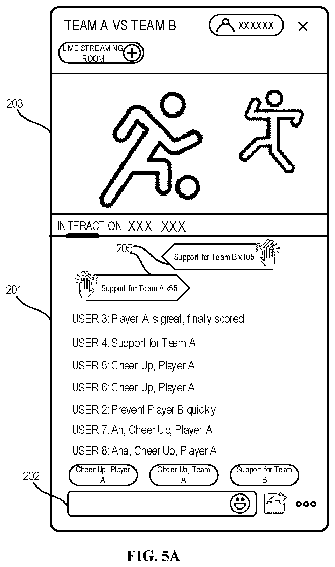

FIG. 5A illustrates an example in this case. In the example shown in FIG. 5A, the live streaming content 203 presents a live streaming video picture in which two teams (Team A and Team B) are playing a ball game. Both teams have fans watching the live streaming content 203 in the live streaming room and publishing user comments for supporting their favorite teams. In the live streaming room, the leading trending comments corresponding to the two teams may be preconfigured, for example, "Cheer Up, Team A", "Support for Team B", and the like. After the number of comments published by the fans of the two teams in the live streaming room reaches the corresponding threshold number, the leading trending comments 205 corresponding to the two teams are presented at different locations on the live streaming interface at the same time, which are the leading trending comments 205 of the adversarial style shown in FIG. 5A.

For a threshold number that matches the leading trending comment 205, in some embodiments, the threshold number set for each party involved in the live streaming content may be the same. For example, the threshold number of user comments for each team that match the corresponding leading trending comment 205 may be set to 100. After the number of user comments matching the leading trending comment 205 (hereinafter referred to as the first leading trending comment) "Cheer Up, Team A" corresponding to Team A and the number of user comments matching the leading trending comment 205 (hereinafter referred to as the second leading trending comment) corresponding to Team B reach 100, the first and second leading trending comments may be presented simultaneously at different locations on the user interface, that is, "Cheer Up, Team A" and "Support for Team B".

Of course, in some alternative embodiments, the threshold number set for each party involved in the live streaming content may also be different. For example, Team A is a visiting team, while Team B is a home team, and the threshold number of user comments of Team A that match the corresponding leading trending comment 205 may be set to 50, while the threshold number of Team B may be set to 100. In such an example, when the number of user comments matching the leading trending comment 205 "Cheer Up, Team A" corresponding to the team A reaches 50, and the number of user comments corresponding to the team B "Support for Team B" reaches 100, the first and second leading trending comments may be presented simultaneously at different locations on the user interface, i.e., "Cheer Up, Team A" and "Support for Team B", respectively.

Additionally, for a leading trending comment 205 with adversarial nature, similar to the previously mentioned leading trending comment 205 without adversarial nature, a real-time number of user comment matching the leading trending comment 205 having a tendency may also be displayed near the leading trending comment 205, and an icon corresponding to the leading trending comment 205 is displayed at an appropriate location and so on. For example, icons such as team logos, team flags and the like may be displayed next to the first and second leading trending comments "Cheer Up, Team A" and "Support for Team B", respectively, to optimize the presentation effect of the leading trending comment 205. Of course, in some alternative embodiments, the displayed icon may also be independent of the leading trending comment 205, but only some simple icons with dynamic effect.

In some embodiments, in the user interface of the live streaming room, the location of the leading trending comment 205 for multiple parties involved in the live streaming content may be determined based on a comparison between the numbers of matched user comments associated with the respective parties. For example, a comparison of the number of user comments matching the first leading trending comment and the number of user comments matching the second leading trending comment determines the locations of the first leading trending comment and the second leading trending comment. For example, in FIG. 5A, it is assumed that the number of user comments matching the first leading trending comment "Cheer Up, Team A" is 55, and the number of user comments matching the second leading trending comment "Support for Team B" is 105, when presented, the second leading trending comment and the corresponding number of user comments may be presented above the first leading trending comment and the corresponding user comment to indicate different numbers of user comments.

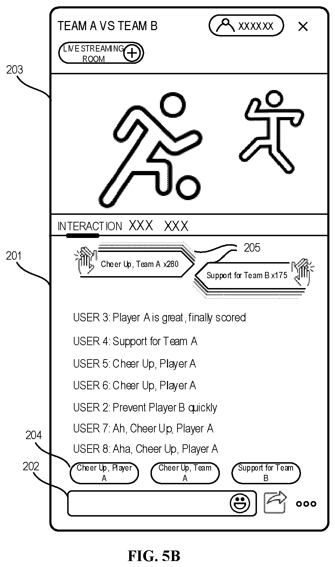

In some embodiments, after the first and second leading trending comments have been presented at the same time for a predetermined duration (this phase is referred to as the start phase), the competition phase may be entered, as shown in FIG. 5B. After entering the competition phase, the numbers of user comments that match the first and second leading trending comments may be refreshed in real time or regularly refreshed at a predetermined time interval (e.g., 0.5s), and a change of the locations of the first and second leading trending comments is presented in real time based on the numbers of corresponding user comments. For example, in the competition phase, as time goes on, the number of user comments that match the first leading trending comment gradually increases from 55 at the beginning to 280, and the number of user comments that match the second leading trending comment gradually increases from 105 at the beginning to 175. In this process, the presented first leading trending comment may be gradually moved upward, and the presented second leading trending comment is gradually moved downward, thereby achieving a situation that the first leading trending comment is presented above the second leading trending comment according to the comparison of the numbers of the user comments.

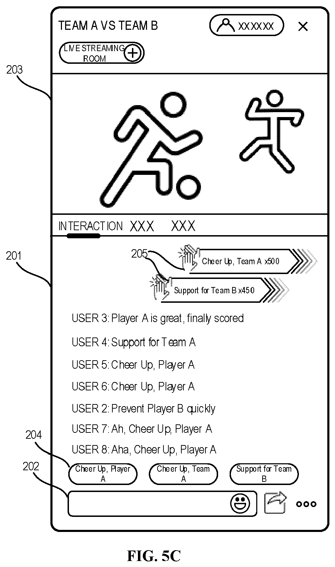

Of course, it should be understood that the above embodiments of displaying the two leading trending comments 205 up and down respectively according to different numbers of user comments matched therewith are merely illustrative and are not intended to limit the scope of the present disclosure. Other suitable presentation modes are also possible as long as the numbers of matched user comments can be more intuitively reflected. For example, in some embodiments, the upper and lower locations of the first leading trending comment and the second leading trending comment may also be fixed, and in the competition phase, the locations of the two leading trending comments in the left and right directions may vary according to the numbers of matched user comments. For example, as shown in FIG. 5C, the greater the number of matched user comments, the more the location of the leading trending comment 205 is to the right side to present a more intuitive display of the racing of both the comment numbers, thereby further improving the atmosphere of the live streaming.

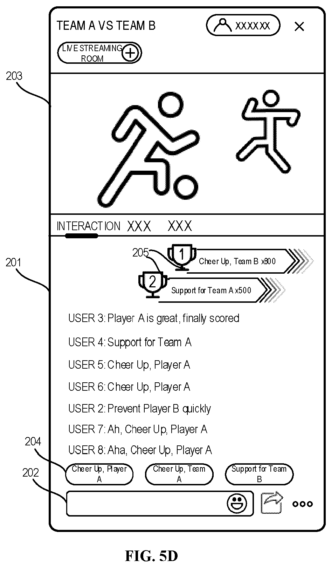

After the competition phase has been presented for a specified duration, a final presentation phase may be entered. In the final presentation phase, the numbers of user comments that match the leading trending comment 205 are no longer counted in real time. Instead, the first and second leading trending comments and the final numbers of user comments may be presented based on the final numbers of user comments that match the first and second leading trending comments, as shown in FIG. 5D. During presenting, different identification may be presented beside different leading trending comments 205 based on different numbers of user comments.

For example, assuming that the final number of user comments that match the first leading trending comment is 500, while the final number of user comments that match the second leading trending comment is 800, in this case, a gold medal or "champion" icon may be displayed next to the second leading trending comment, while a silver medal or "runner-up" icon may be displayed next to the first leading trending comment to present this difference, as shown in FIG. 5D.

As previously described, the leading trending comments 205 with tendency and associated with the parties (such as, Team A and Team B as described above) involved in the adversarial live streaming content 203, are presented simultaneously at different locations on the user interface, and the presentation is divided into three phases, i.e., the start phase, the competition phase, and the final presentation phase. The durations of the three phases may be different, and may be customized as needed. Additionally, the total duration of the three phases may also be configured, and the leading trending comment 205 is hidden after the threshold duration is reached.

Additionally, for the leading trending comment 205 with tendency, the zero setting rule as described above is also applicable. That is, in some embodiments, the number of user comments that match the leading trending comment 205 may be set to zero in a case that the duration of presenting the leading trending comment 205 exceeds a certain duration (the duration may be the total duration of the three phases as mentioned above), and/or the number of user comments that match the leading trending comment 205 reaches a maximum threshold, thereby facilitating the presentation of the other leading trending comments 205.

In some embodiments, after the leading trending comment 205 is displayed, for the following leading trending comment 205 to be displayed, in addition to satisfying the requirement of reaching the threshold number, the duration requirement is required, that is, satisfying that a duration (hereinafter referred to as a second duration) since the last presentation of the leading trending comment 205 exceeds a certain threshold (for example, a second threshold duration). In this way, an empty window duration can be set between the two leading trending comments 205, thereby facilitating the user's attention to the new leading trending comment 205.

In some embodiments, for the leading trending comment 205 with the tendency, in addition to satisfying that the numbers of the user comments for all opposing parties reach the threshold number and the duration requirement as described above, an interval duration between two leading trending comments 205 with tendencies may also be set. For example, the interval duration between two leading trending comments 205 with tendencies may be set to 30 minutes, or any other duration. In this way, various leading trending comments 205 can be reasonably presented and displayed, which improves the effect of improving the atmosphere of the live streaming room.

In some embodiments, if both a leading trending comment 205 with tendency and a leading trending comment 205 without tendency satisfy the presentation condition described above, in order to present the adversarial effect for the user, it is prioritize the presentation of the leading trending comment 205 with the tendency, that is, to simultaneously present the leading trending comment 205 corresponding to each party involved in the live streaming content 203, and to present the start phase, the competition phase, and the final presentation phase, so that the atmosphere of the live streaming room can be further activated.

The above-mentioned live streaming content that involves the first party and the second party is described as an example. It should be understood that the embodiments as discussed may also be applied to the live streaming content that involves three or more parties in a similar manner.

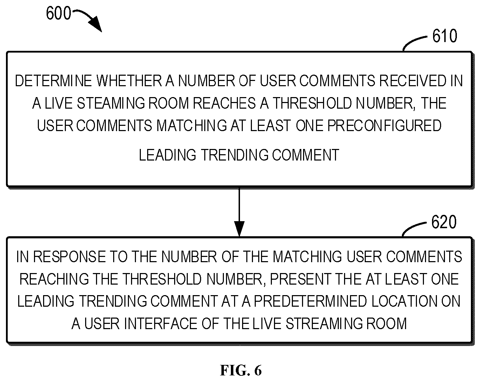

FIG. 6 illustrates a flowchart of a process 600 for live streaming according to some embodiments of the present disclosure. The process 600 may be implemented at the terminal device 110. For the purpose of discussion, the process 600 will be described with reference to the environment 100 of FIG. 1.

At block 610, the terminal device 110 determines whether a number of user comments received in a live steaming room reaches a threshold number, the user comments matching at least one preconfigured leading trending comment.

At block 620, in response to the number of the matching user comments reaching the threshold number, the terminal device 110 presents the at least one leading trending comment at a predetermined location on a user interface of the live streaming room.

In some embodiments, the process may further include in response to a first duration of presenting the at least one leading trending comment exceeding a first threshold duration, hiding the at least one leading trending comment.

In some embodiments, presenting the at least one leading trending comment may include: in response to the number of the matching user comments reaching the threshold number, determining a second duration elapsed from a previous leading trending comment was displayed; and in response to the second duration exceeding a second threshold duration, presenting the at least one leading trending comment.

In some embodiments, the process may further include: after presenting the at least one leading trending comment, presenting a real-time number of user comments matching the at least one leading trending comment on the user interface.

In some embodiments, the process may further include: presenting, at a second predetermined location on the user interface, a tag 204 associated with the at least one leading trending comment; generating a user comment in response to a receipt of a predetermined operation on the tag 204, content of the generated user comment matching the leading trending comment; and presenting the generated user comment in the live streaming room.

In some embodiments, live streaming content of the live streaming room relates to a first party and a second party (e.g., team A and team B as mentioned above), wherein presenting the at least one leading trending comment may include: presenting a first leading trending comment associated with the first party at a first location on the user interface; and presenting a second leading trending comment associated with the second party at a second location on the user interface.

In some embodiments, a relative location relationship of the first location and the second location depends on a comparison of a first number of user comments matching the first leading trending comment and a second number of user comments matching the second leading trending comment.

In some embodiments, the process may further include: in response to a change in a result of the comparison of the first number and the second number, adjusting the relative location relationship between the first location and the second location.

In some embodiments, live streaming content of the first party and live streaming content of the second party in the live streaming room are at least partially of an adversarial nature, the first leading trending comment includes a tendency comment for the first party, and the second leading trending comment includes a tendency comment for the second party. presenting the first leading trending comment and the second leading trending comment may include in response to a determination whether the number of user comments matching a third leading trending comment reaches a threshold number and the third leading trending comment does not have a tendency to the first party or to the second party, presenting the first leading trending comment and the second leading trending comment with a higher priority than a priority of the third leading trending comment.

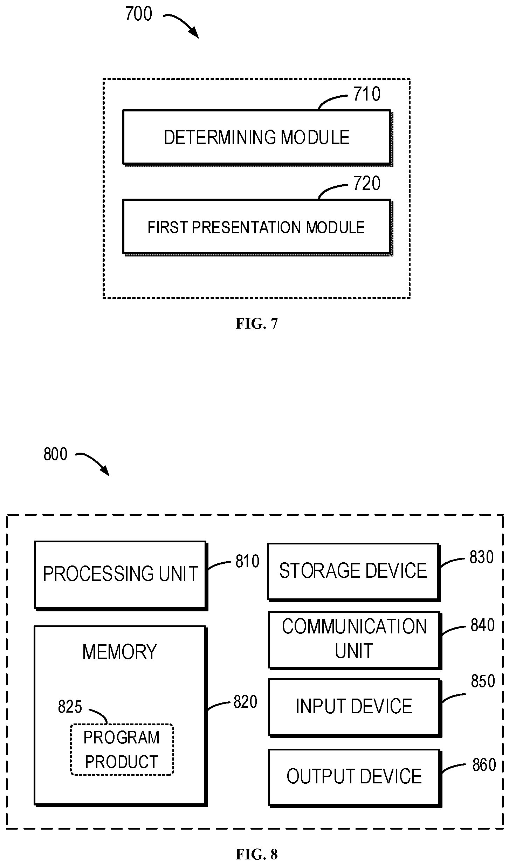

FIG. 7 illustrates a schematic structural block diagram of an apparatus 700 for live streaming according to some embodiments of the present disclosure. The apparatus 700 may be implemented or included in the terminal device 110. The various modules/components in the apparatus 700 may be implemented by hardware, software, firmware, or any combination thereof.

The apparatus 700 includes a determining module 710 configured to determine whether a number of user comments received in a live steaming room reaches a threshold number, the user comments matching at least one preconfigured leading trending comment. The apparatus 700 further includes a first presentation module 720 configured to present, in response to the number of the matching user comments reaching the threshold number, the at least one leading trending comment at a predetermined location on a user interface of the live streaming room.

In some embodiments, the apparatus 700 further includes: a hiding module in response to a first duration of presenting the at least one leading trending comment exceeding a first threshold duration, hide the at least one leading trending comment.

In some embodiments, the first presentation module 720 is further configured to: in response to the number of the matching user comments reaching the threshold number, determine a second duration elapsed from a previous leading trending comment was displayed; and in response to the second duration exceeding a second threshold duration, present the at least one leading trending comment.

In some embodiments, the apparatus 700 further includes: a second presentation module, configured to after presenting the at least one leading trending comment, present a real-time number of user comments matching the at least one leading trending comment on the user interface.

In some embodiments, the apparatus 700 further includes: a third presentation module, configured to present, at a second predetermined location on the user interface, a tag 204 associated with the at least one leading trending comment; a generation module, configured to generate a user comment in response to a receipt of a predetermined operation on the tag 204, content of the generated user comment matching the leading trending comment; and a fourth presentation module, configured to present the generated user comment in the live streaming room.

In some embodiments, live streaming content of the live streaming room relates to a first party and a second party, wherein the first presentation module is further configured to: present a first leading trending comment associated with the first party at a first location on the user interface; and present a second leading trending comment associated with the second party at a second location on the user interface.

In some embodiments, a relative location relationship of the first location and the second location depends on a comparison of a first number of user comments matching the first leading trending comment and a second number of user comments matching the second leading trending comment.

In some embodiments, the apparatus 700 further includes: an adjustment module configured to adjust, in response to a change in a result of the comparison of the first number and the second number, the relative location relationship between the first location and the second location.

In some embodiments, live streaming content of the first party and live streaming content of the second party in the live streaming room are at least partially of an adversarial nature, the first leading trending comment comprises a tendency comment for the first party, the second leading trending comment comprises a tendency comment for the second party. In some embodiments, the first presentation module is further configured to present, in response to a determination whether the number of user comments matching a third leading trending comment reaches a threshold number and the third leading trending comment does not have a tendency to the first party or to the second party, the first leading trending comment and the second leading trending comment with a higher priority than a priority of the third leading trending comment.

FIG. 8 illustrates a block diagram of an electronic device 800 in which one or more embodiments of the present disclosure may be implemented. It should be understood that the electronic device 800 shown in FIG. 8 is merely illustrative and should not limit on the functionality and scope of the embodiments described herein. The electronic device 800 shown in FIG. 5 may be configured to implement the terminal device 110 in FIG. 1.

As shown in FIG. 8, the electronic device 800 is in the form of a general-purpose electronic device. Components of the electronic device 800 may include, but are not limited to, one or more processors or processing units 810, a memory 820, a storage device 830, one or more communication units 840, one or more input devices 850, and one or more output devices 860. The processing unit 810 may be an actual or virtual processor and capable of performing various processing according to a program stored in the memory 820. In a multiprocessor system, multiple processing units execute computer-executable instructions in parallel to improve the parallel processing capability of the electronic device 800.

The electronic device 800 typically includes a plurality of computer storage media. Such media may be any available media accessible to the electronic device 800, including, but not limited to, volatile and non-volatile media, removable and non-removable media. The memory 820 may be volatile memory (e.g., register, cache, random access memory (RAM)), non-volatile memory (e.g., read-only memory (ROM), electrically erasable programmable read-only memory (EEPROM), flash memory), or some combination thereof. The storage device 830 may be a removable or non-removable medium and may include a machine-readable medium, such as a flash drive, a disk, or any other medium, which may be capable of storing information and/or data (e.g., training data for training purpose) and may be accessed within the electronic device 800.

The electronic device 800 may further include additional removable/non-removable, volatile/non-volatile storage media. Although not shown in FIG. 5, a magnetic disk drive for reading from or writing to a removable, non-volatile disk (e.g., a "floppy disk") and an optical disk drive for reading from or writing to a removable, non-volatile optical disk may be provided. In these cases, each drive may be connected to a bus (not shown) via one or more data media interfaces. The memory 820 may include a computer program product 825 having one or more program modules configured to perform various methods or actions of various embodiments of the present disclosure.

The communication unit 840 is configured to communicate with other electronic devices via a communication medium. Additionally, the functionality of components of the electronic device 800 may be implemented as a single computing cluster or a plurality of computing machines capable of communicating over a communication connection. Thus, the electronic device 800 may operate in a networked environment by logical connections with one or more other servers, network personal computers (PCs), or another network node.

The input device 850 may be one or more input devices, for example, a mouse, a keyboard, a trackball, or the like. The output device 860 may be one or more output devices, for example, a display, a speaker, a printer, or the like. The electronic device 800 may also communicate with one or more external devices (not shown) through the communication unit 840 as needed, the external devices are such as storage devices, display devices, etc. , communicate with one or more devices that enable a user to interact with the electronic device 800, or communicate with any device (e.g., a network card, a modem, etc.) that enables the electronic device 800 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, which is tangibly stored on a non-transitory computer-readable medium and including computer-executable instructions, and the computer-executable instructions are executed by a processor to implement the method described above.

Aspects of the present disclosure are described herein with reference to flowcharts and/or block diagrams of methods, apparatus, devices and computer program products implemented in accordance with the present disclosure. It should be understood that each block of the flowcharts and/or block diagrams and combinations of blocks in the flowchart and/or block diagrams can be implemented by computer readable program instructions.

These computer readable program instructions may be provided to a processing unit of a general-purpose computer, special purpose computer, or other programmable data processing apparatus to produce a machine, such that the instructions, when executed via the processing unit of the computer or other programmable data processing apparatus, create means for implementing the functions/actions specified in one or more blocks of the flowcharts and/or block diagrams. These computer readable program instructions may also be stored in a computer readable storage medium that can direct a computer, a programmable data processing apparatus, and/or other devices to function in a particular manner, such that the computer readable medium storing the instructions includes an article of manufacture that includes instructions which implement various aspects of the functions/actions specified in one or more blocks of the flowcharts and/or block diagrams.

The computer readable program instructions may be loaded onto a computer, other programmable data processing apparatus, or other devices, causing a series of operational steps to be performed on the computer, other programmable data processing apparatus, or other devices, to produce a computer implemented process such that the instructions, when being executed on the computer, other programmable data processing apparatus, or other devices, implement the functions/actions specified in one or more blocks of the flowchart and/or block diagrams.

The flowcharts and block diagrams in the drawings illustrate the architecture, functionality, and operations of possible implementations of the systems, methods and computer program products according to various implementations of the present disclosure. In this regard, each block in the flowchart or block diagram may represent a module, segment, or portion of instructions which includes one or more executable instructions for implementing the specified logical function(s). In some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

Various implementations of the present disclosure have been described as above, the foregoing description is illustrative, not exhaustive, and the present application is not limited to the implementations as disclosed. Many modifications and variations will be apparent to those of ordinary skill in the art without departing from the scope and spirit of the implementations as described. The selection of terms used herein is intended to best explain the principles of the implementations, the practical application, or improvements to technologies in the marketplace, or to enable those skilled in the art to understand the implementations disclosed herein.

## Claims

1. A method for live steaming, comprising:
determining whether a number of user comments received in a live steaming room reaches a threshold number, the user comments matching at least one preconfigured leading trending comment; and
in response to the number of the matching user comments reaching the threshold number, presenting the at least one leading trending comment at a predetermined location on a user interface of the live streaming room.

2. The method of claim 1, further comprising:
in response to a first duration of presenting the at least one leading trending comment exceeding a first threshold duration, hiding the at least one leading trending comment.

3. The method of claim 1, wherein presenting the at least one leading trending comment comprises:
in response to the number of the matching user comments reaching the threshold number, determining a second duration elapsed from a previous leading trending comment was displayed; and
in response to the second duration exceeding a second threshold duration, presenting the at least one leading trending comment.

4. The method of claim 1, further comprising:
after presenting the at least one leading trending comment, presenting a real-time number of user comments matching the at least one leading trending comment on the user interface.

5. The method of claim 1, further comprising:
presenting, at a second predetermined location on the user interface, a tag associated with the at least one leading trending comment;
generating a user comment in response to a receipt of a predetermined operation on the tag, content of the generated user comment matching the leading trending comment; and
presenting the generated user comment in the live streaming room.

6. The method of claim 1, wherein live streaming content of the live streaming room relates to a first party and a second party, wherein presenting the at least one leading trending comment comprises:
presenting a first leading trending comment associated with the first party at a first location on the user interface; and
presenting a second leading trending comment associated with the second party at a second location on the user interface.

7. The method of claim 1, wherein a relative location relationship of the first location and the second location depends on a comparison of a first number of user comments matching the first leading trending comment and a second number of user comments matching the second leading trending comment.

8. The method of claim 7, further comprising:
in response to a change in a result of the comparison of the first number and the second number, adjusting the relative location relationship between the first location and the second location.

9. The method of claim 7, wherein live streaming content of the first party and live streaming content of the second party in the live streaming room are at least partially of an adversarial nature, the first leading trending comment comprises a tendency comment for the first party, the second leading trending comment comprises a tendency comment for the second party, and
wherein presenting the first leading trending comment and the second leading trending comment comprises:
in response to a determination whether the number of user comments matching a third leading trending comment reaches a threshold number and the third leading trending comment does not have a tendency to the first party or to the second party, presenting the first leading trending comment and the second leading trending comment with a higher priority than a priority of the third leading trending comment.

10. An apparatus for live streaming, comprising:
a determining module configured to determine whether a number of user comments received in a live steaming room reaches a threshold number, the user comments matching at least one preconfigured leading trending comment; and
a first presentation module configured to present, in response to the number of the matching user comments reaching the threshold number, the at least one leading trending comment at a predetermined location on a user interface of the live streaming room.

11. An electronic device, comprising:
at least one processing unit; and
at least one memory coupled to the at least one processing unit and storing instructions for execution by the at least one processing unit, the instructions, when executed by the at least one processing unit, causing the device to perform the method of any of claims 1 to 9.

12. A computer readable storage medium having a computer program stored thereon, the computer program, when executed by a processor, implementing the method of any of claims 1 to 9.
